(19) Europäisches Patentamt / European Patent Office / Office européen des brevets

(11) **EP 2 980 805 B1**

(12) **EUROPEAN PATENT SPECIFICATION**

(45) Date of publication and mention
of the grant of the patent:
**04.07.2018 Bulletin 2018/27**

(21) Application number: **14775526.8**

(22) Date of filing: **24.03.2014**

(51) Int Cl.:
*H01B 12/16* (2006.01)   *H01L 39/04* (2006.01)
*H02G 15/34* (2006.01)   *F25D 17/02* (2006.01)

(86) International application number:
**PCT/JP2014/058081**

(87) International publication number:
**WO 2014/157084 (02.10.2014 Gazette 2014/40)**

(54) **COOLING DEVICE FOR SUPERCONDUCTIVE CABLE**

KÜHLVORRICHTUNG SUPRALEITENDES KABEL

DISPOSITIF DE REFROIDISSEMENT POUR CÂBLE SUPRACONDUCTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.03.2013 JP 2013074453**

(43) Date of publication of application:
**03.02.2016 Bulletin 2016/05**

(73) Proprietors:
• **Mayekawa Mfg. Co., Ltd.**
**Koto-ku**
**Tokyo 135-8482 (JP)**
• **Railway Technical Research Institute**
**Tokyo 185-8540 (JP)**

(72) Inventors:
• **TAMADA, Noriharu**
**Tokyo 135-8482 (JP)**
• **TOMITA, Masaru**
**Kokubunji-shi**
**Tokyo 185-8540 (JP)**

(74) Representative: **Regimbeau**
**20, rue de Chazelles**
**75847 Paris Cedex 17 (FR)**

(56) References cited:
**CN-Y- 2 767 916**      **JP-A- S5 073 189**
**JP-A- 2000 114 030**   **JP-A- 2001 289 546**
**JP-A- 2008 027 780**   **JP-A- 2010 177 677**
**JP-B2- 3 208 069**     **KR-B1- 100 633 558**
**US-A- 4 020 274**      **US-A- 4 209 657**

Remarks:
The file contains technical information submitted after the application was filed and not included in this specification

**Description**

TECHNICAL FIELD

This invention relates to a technical field of a cooling device for a superconductive cable with which a refrigerant is supplied to and circulated in the superconductive cable used for transmitting power so that the superconductive cable can be cooled to an extremely low temperature state.

BACKGROUND

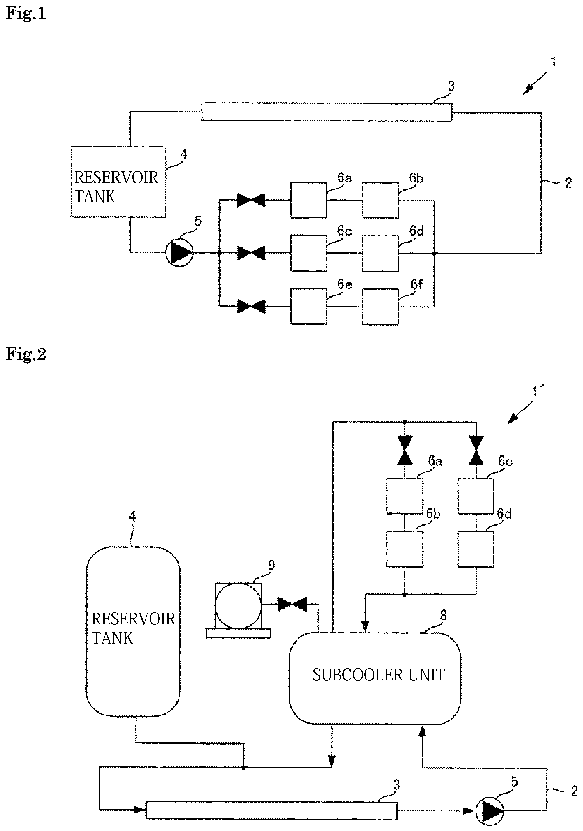

Superconductive cables have been known that are formed by applying a superconductor, the electrical resistance of which is substantially eliminated under an extremely low temperature condition, to a power transmission cable used for power transmission. The superconductive cables exert especially high power transmission efficiency in DC power transmission, involving no AC loss, and are suitable for transmitting a large amount of power. A cooling device with which a refrigerant, such as liquid nitrogen, is supplied and circulated is used to cool the superconductive cables to an extremely low temperature state. For example, Patent Documents 1 and 2 discloses a cooling device of this type.
FIG. 1 is a schematic view of a cooling device 1 disclosed in Patent Document 1.
The cooling device 1 includes: a circulation circuit 2 in which a refrigerant for cooling a superconductive cable circulated; a superconductive cable 3 as a cooling target; a reservoir tank 4 which stores the refrigerant flowing in the circulation circuit 2; a circulation pump 5 which makes the refrigerant circulate in the circulation circuit 21; and a plurality of refrigerators 6 (a total of six refrigerators denoted with reference numerals 6a to 6f) for cooling the refrigerant. The cooling device 1 includes the plurality of refrigerators 6 and adjusts the number of operating refrigerators in accordance with changes in a thermal load on the superconductive cable 3. When some of the refrigerators 6 fail, other refrigerators are operated instead so that the operation can be continued.
As described above, the plurality of refrigerators are provided and thus the advantage described above can be obtained in Patent Document 1. However, the installation space might be large, and reliability might be low due to a complicated device configuration. In view of the above problems, Non-Patent Document 1 discloses a cooling device with which the number of refrigerators can be reduced.
FIG. 2 is a schematic view of a cooling device 1' according to Non-Patent Document 1. Components in FIG. 2 common to FIG. 1 are denoted with the same reference numerals, and the redundant description will be omitted as appropriate.
The cooling device 1' includes a subcooler unit 8 as a component for cooling a refrigerant flowing in the circulation circuit 2. The subcooler unit 8 stores the refrigerant for cooling the refrigerant flowing in the circulation circuit 2. The stored refrigerant evaporates due to thermal load on the cable to turn into gas. The gas is subjected to recondensation and cooled by the refrigerators 6 (a total of four refrigerators denoted with the reference numerals 6a to 6d in FIG. 2). The refrigerant thus cooled by the subcooler unit 8 is pumped to the superconductive cable 3 by the circulation pump 5 disposed on the circulation circuit 2.
When any of the refrigerators 6 fails, a vacuum discharge system 9 decompresses the subcooler unit 8 storing the refrigerant, so that a saturation temperature is lowered and cold is generated. As described above, in the cooling device 1', the refrigerant can be continuously cooled even when the refrigerators 6 cannot operate. Thus, extra refrigerators need not to be provided for failure, and thus the number of refrigerators 6 can be reduced accordingly.
In the cooling device 1', a reservoir tank 4 which stores a refilled refrigerant is disposed on the circulation circuit 2, so that the amount of the refrigerant flowing in the cable can be maintained at a constant amount without being excessive or falling short, even when an operation pressure and a temperature of the cable fluctuate.

Citation List

Patent Literature

Patent Document 1: Japanese Patent Application Laid-open No. 2000-114030
Patent Document 2: Japanese Patent Application Laid-open No. 2011-54500

Non-Patent Literature

Non-Patent Document 1: HTS Underground Power Cable Final Report, DE-FC36-03GO013301 (http://www.osti.gov/bridge/servlets/purl/975691-IRpM7i/975691.pdf)

SUMMARY

Technical Problem

Application of the superconductive cable to a railway field has been under study because a large amount of power is transmitted through a power line for supplying power to a trolley wire in contact with an electric rail car, for example. When the superconductive cable is employed in this field, the reduction in a maintenance cost due to a reduced number of transformer substations and an increased operation area of a high speed train involving a large amount of power consumption due to wider power transmission are expected, in addition to the improvement of the power transmission efficiency. However, the space in which the facility can be installed is limited in the railway field, and this hinders the application of the superconductive cable, which is likely to involve a large cooling device.

The cooling device 1 in Patent Document 1, which requires a large number of refrigerators 6, might involve a large installation scale. The cooling device 1' in Non-Patent Document 1 can reduce the number of refrigerators 6 from that in the cooling device 1, but requires both the subcooler unit 8 and the reservoir tank 4 and thus involves a large scale after all. The reservoir tank 4 needs to be set at a high pressure to supply the refrigerant to the circulation circuit with pressure. When such higher-pressure components increase, a maintenance load increases.

In this regard, it is an object of the present invention to provide a cooling for a superconductive cable which can be installed in a limited installation space with an efficient arrangement.

Solution to Problem

In order to solve the problems described above, a cooling device for a superconductive cable according to the present invention is a cooling device for a superconducting cable used for transmitting electricity, the cooling device cooling the superconducting cable, by supplying and circulating a refrigerant, and including a reservoir tank which stores the refrigerant, a circulation pump unit which is accommodated in the reservoir tank and pumps the refrigerant stored in the reservoir tank, and a cooling unit which is accommodated in the reservoir tank and supplies the refrigerant to the superconducting cable after cooling the refrigerant pumped from the circulation pump unit.

According to the present invention, in the reservoir tank storing the refrigerant, the pump unit which pumps the refrigerant and the cooling unit which cools the refrigerant are accommodated, whereby the cooling device can be downsized. Thus, a device required for cooling the superconductive cable can be employed and applied to fields such as a railway field involving a limited installation space with an efficient arrangement.

In one aspect of the present invention, the cooling unit includes: a heat exchanging unit which cools the refrigerant, pumped by the circulation pump unit, through heat exchanging with a secondary refrigerant cooled by a refrigerator, and a decompression tank which is formed in the heat exchanging unit, configured to be capable of performing heat exchange with the heat exchanging unit, and generates cold by decompressing the refrigerant, introduced into the decompression tank, with a decompression device.

According to the present aspect, when the refrigerator is in the normal operation state, the refrigerant is cooled through heat exchange with the secondary refrigerant cooled by the refrigerator in the heat exchanging unit of the cooling unit. When the refrigerator cannot operate, the refrigerant introduced in the decompression tank is decompressed to generate cold, so that the refrigerant pumped from the circulation pump unit is cooled. Thus, the cooling of the refrigerant can continue even when the refrigerator cannot operate. As a result, no refrigerator needs to be prepared for the operation under abnormality, whereby the cooling device as a whole can be further downsized.

In the present specification, the secondary refrigerant refers widely to the secondary refrigerant for cooling a refrigerant flowing in the cooling circuit for the superconductive cable by exchanging heat with the refrigerant. For example, when a Brayton refrigerator is used as the refrigerator, extremely low temperature gas, such as neon or helium, may be used as the secondary refrigerant.

In this case, the cooling unit may include an outer cover unit provided to cover the heat exchanging unit, and the refrigerant used for cooling the superconducting cable may be supplied to the reservoir tank after flowing through a gap formed between the heat exchanging unit and the outer cover unit.

When the cold is generated by decompressing the refrigerant in the decompression tank, the refrigerant might condensate on the surface of the heat exchanging unit due to the cold. Thus, the heat exchange efficiency might degrade and the cooling performance might degrade. According to the present aspect, the refrigerant with a temperature risen by being used for cooling the superconductive cable in the gap between an outer cover unit that surrounds the heat exchanging unit and the heat exchanging unit. Thus, the condensation of the refrigerant can be prevented, and an excellent cooling performance can be achieved.

The decompression tank may be connected to a refrigerant storage tank which stores a refrigerant at atmospheric pressure, the refrigerant storage tank being capable of supplying the refrigerant to the decompression tank.

Conventionally, a tank that stores the refrigerant is set at a high pressure in many cases to supply the refrigerant to the circulation circuit at the atmospheric pressure or higher. On the other hand, according to the present aspect, when the refrigerator cannot operate, the decompression tank is decompressed to be at a pressure lower than the atmospheric pressure. Thus, the pressure of the refrigerant storage tank for supplying the refrigerant to the decompression tank can set to be lower than (at the atmospheric pressure) than in the conventional case. With the refrigerant storage tank set to be at a lower pressure provided, the maintenance load can be reduced.

In another aspect of the present invention, the circulation pump unit includes a chamber which stores the refrigerant introduced from the reservoir tank and has an upper opening portion closed by a lid portion, a pump device which is supported by a supporting member extending downward from the lid portion, and pumps the refrigerant stored in the chamber, and a discharge pipe which introduces the refrigerant, pumped by the pump device, into the cooling unit. The discharge pipe is elastically connected to the pump device so that the pump device is movable in the chamber.

The refrigerant introduced from the reservoir tank into the circulation pump unit is pumped to the cooling unit through the discharge pipe by the pump device disposed in the chamber. The pump device performs a mechanical operation, and thus has a shorter service life than other components and is likely to fail. According to the present aspect, when the pump device fails, the pump device supported by the supporting member provided to the lid can be easily moved to an easily accessed position, while the inside of the chamber is isolated from the reservoir tank by the shutoff valve. The discharge pipe is elastically connected to the discharge side of the pump device, and thus does not hinder such movement of the pump device in the chamber. With such a configuration, a maintenance operation such as replacing or repairing is performed on the pump device in which an abnormality has occurred can be accessed to an easily accessed position, whereby quick recovery is possible.

Advantageous Effects

In the reservoir tank storing the refrigerant, the pump unit which pumps the refrigerant and the cooling unit which cools the refrigerant are accommodated, whereby the cooling device can be downsized. Thus, a device required for cooling the superconductive cable can be employed applied to fields such as a railway field involving a limited installation space with an efficient arrangement.

BRIEF DESCRIPTION OF DRAWINGS

FIG. 1 is a schematic view of a cooling device disclosed in Patent Document 1.
FIG. 2 is a schematic view of a cooling device disclosed in Non-Patent Document 1.
FIG. 3 is a schematic view of an entire cooling device for a superconductive cable according to an embodiment.
FIG. 4 is a cross-sectional view showing the inner configuration of a circulation pump unit.
FIG. 5 is a cross-sectional view showing the inner configuration of a cooling unit.

DETAILED DESCRIPTION

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

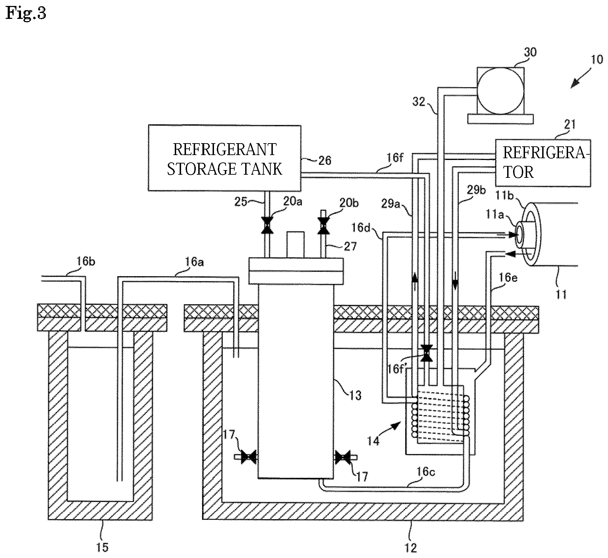

FIG. 3 is a schematic view of an entire cooling device 10 for a superconductive cable according to an embodiment.

The cooling device 10 is a cooling device with which a refrigerant is circulated and supplied in a superconductive cable 11 as a cooling target, so that an extremely low temperature state of the superconductive cable 11 is achieved. The cooling device 10 may use any refrigerant as long as the superconductive cable 11 can be cooled to the extremely low temperature region in which a superconductive property can be exerted. In the present embodiment, the superconductive cable 11 is formed of what is known as a high-temperature superconductive material which exerts the superconductive property in a temperature region with a lowest temperature of 77 K as a boiling point of liquid nitrogen, and thus the liquid nitrogen is used as the refrigerant.

The superconductive cable 11 employs what is known as a Go-Return system in which a flow path, in which the refrigerant flows, is provided in a center portion 11a and a peripheral portion 11b which have forms of coaxial cylinders and are thermally insulated from each other. More specifically, the following circulation path is formed. The refrigerant, cooled to be in a sub-cool state (state with a temperature not higher than a saturation temperature) by the cooling device 10, is supplied to the center portion 11a of the superconductive cable 11. Then, the refrigerant returns to the cooling device 10 through the peripheral portion 11b, after being heated by a thermal load on the superconductive cable 11. A reservoir tank 12 which stores the refrigerant returned from the superconductive cable 11, a circulation pump unit 13 which pumps the refrigerant stored in the reservoir tank 12, and a cooling unit 14 which cools the refrigerant which has been pumped from the circulation pump unit 13 are disposed on a circulation path for the refrigerant.

The reservoir tank 12 functions as a buffer tank in the circulation circuit. The reservoir tank 12 may be directly exposed to the atmosphere so that the pressure is set to the atmospheric pressure. However, the reservoir tank 12 is filled with the liquid nitrogen at a low temperature, more specifically, the sub cool temperature. Thus, the direct exposure to the atmosphere may lead to mixture of moisture and oxygen in the air into the reservoir tank 12 through a discharge pipe, which inhibits the cooling of the super conductive power transmission cable. To prevent this, in the present embodiment, the pressure in the reservoir tank 12 is exposed to the atmosphere through a subtank 15 filled with the liquid nitrogen at the atmospheric pressure and at 77 K.

In a conventional cooling device, a tank (specifically, the reservoir tank 4 shown in FIGs. 1 and 2) which stores the refrigerant is set to a higher pressure so that the refrigerant can be pumped into the refrigerant circuit at the atmospheric pressure or higher. On the other hand, the tank in the present embodiment can be set to the atmospheric pressure, whereby a small maintenance and management load can be achieved.

The reservoir tank 12 is exposed to the atmosphere indirectly, that is, through the subtank 15. Thus, the degradation of the cooling performance due to the entrance of the moisture and air in the atmosphere into the circulation path for the refrigerant, which is the case in the configuration where the reservoir tank 12 is directly exposed to the atmosphere, can be prevented.

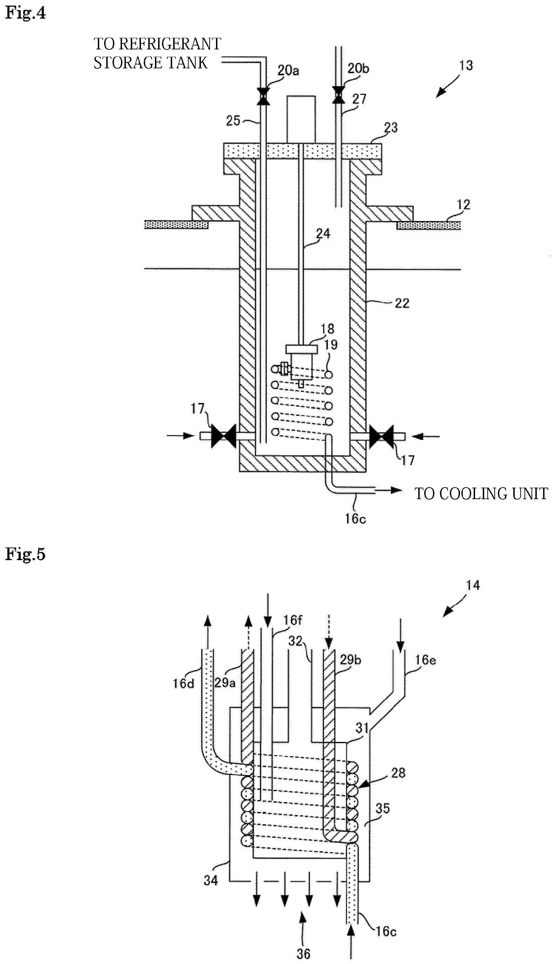

The refrigerant stored in the reservoir tank 12 is taken into a circulation pump unit 13 through a shutoff valve 17 (the shutoff valve 17 is set to be in an "open" state in a normal operation state). A pump device 18 (refer to FIG. 5) in the circulation pump unit 13 pumps and thus supplies the refrigerant, taken in from the reservoir tank 12, to the cooling unit 14 through a refrigerant line 16c.

The cooling unit 14 cools the refrigerant received from the circulation pump unit 13. In the cooling unit 14, the configuration of which is described in detail later, the refrigerant, supplied through the refrigerant line 16c, exchanges heat with a secondary refrigerant, cooled in the refrigerator 21, and thus is cooled to be in the subcooled state. The resultant refrigerant is then supplied through a refrigerant line 16d to the superconductive cable 11 (center portion 11a).

Here, the refrigerator 21 is not particularly limited as long as the refrigerant can be cooled to be in the subcooled state, and a Brayton refrigerator, a Stirling refrigerator, a GM refrigerator, a pulse tube refrigerator, or the like can be used. When a Brayton refrigerator is used as the refrigerator 21, extremely low temperature gas, such as neon or helium, may be used as the secondary refrigerant.

In the present embodiment, a case is described where a single refrigerator is used as the refrigerator 21. Alternatively, as shown in FIGs. 1 and 2, a unit including a plurality of refrigerators may be employed (still, the advantage that the number of refrigerators can be reduced from the conventional case can be achieved).

In the cooling device 10, the circulation pump unit 13 and the cooling unit 14 described above are accommodated in the reservoir tank 12. As shown in FIGs. 1 and 2, in the conventional cooling device, these units are separately provided from the reservoir tank, and thus a large installation area is required. By contrast, the circulation path for the refrigerant is formed with the circulation pump unit 13 and the cooling unit 14 disposed in the reservoir tank 12 in the present embodiment. All things considered, the cooling device with an excellent cooling performance can be achieved with a small installation area.

FIG. 3 exemplary illustrates a case where a single circulation pump unit 13 is disposed in the reservoir tank 12. Alternatively, a plurality of circulation pump units 13 may be disposed. In this configuration, when any one of the circulation pump units 13 fails, the cooling device can keep operating by stopping and maintaining the failed circulation pump unit and activating the other circulation pump units. Even when a plurality of circulation pump units are provided, an installed space occupied by the device can be reduced compared with the conventional case as long as the circulation pump units are accommodated in the reservoir tank 12.

Next, the inner configuration of the circulation pump unit 13 will be described in detail. FIG. 4 is a cross-sectional view showing the inner configuration of the circulation pump unit 13.

The circulation pump unit 13 is formed as a cryostat formed of a highly thermally insulating material such as FRP and polypropylene, and includes the pump device 18 in a chamber 22 in communication with the reservoir tank 12 through the shutoff valve 17. The shutoff valve 17 is set to be in an "open" state in the normal operation state. As described later, the shutoff valve 17 is switched to be in a "closed state" when abnormality occurs, so that the inside of the chamber 22 can be isolated from the reservoir tank 12.

The chamber 22 has a substantially cylindrical shape with an opening on the upper side, and is fixed to the reservoir tank 12. The opening, formed on the upper side of the chamber 22, is closed by a lid 23 to be sealed from the outside. A supporting member 24, extending in an axial direction of the chamber 22, has one end attached to the lid 23 and the other end attached to the pump device 18. Thus, the pump device 18 is suspended by the supporting member 24, attached to the lid 23, to float in the chamber 22. The pump device 18 pumps, through a discharge pipe 19 connected to the discharge side, the refrigerant, stored in the chamber 22, to the refrigerant line 16c connected to the cooling unit 14.

As described above, the circulation pump unit 13 pumps the refrigerant taken in from the reservoir tank 12 to the cooling unit 14. The pump device 18 performs a mechanical operation, and thus has a shorter service life than other components and may require maintenance such as replacement and repair when abnormality such as failure occurs. The circulation pump unit 13 according to the present embodiment has a configuration with which the pump device 18, involving frequent maintenance, can be easily accessed from the outside as described below.

When abnormality occurs in the pump device 18, the operation of the cooling device 10 is stopped, and the shutoff valve 17 is switched to the "closed" state, so that the inside of the chamber 22 is isolated from the reservoir tank 12. Then, the liquid nitrogen remaining in the chamber 22 is discharged through a refrigerant discharge line 25 attached to the lid 23. The refrigerant discharge line 25 extends from a vicinity of a bottom portion of the chamber 22 to the outside. When a valve 20a disposed on the refrigerant discharge line 25 is open, the refrigerant is discharged into a refrigerant storage tank 26 (see FIG. 3) connected to a distal end of the refrigerant discharge line 25.

A container pressurizing line 27 is provided to the lid 23. When a valve 20b disposed on the container pressurizing line 27 is open, warm air is introduced into the chamber 22, so that the pressure in the chamber 22 rises, whereby the discharging of the refrigerant from the refrigerant discharge line 25 can be facilitated.

When the refrigerant is discharged from the chamber 22, the lid 23 is removed after the chamber 22 is heated up to an ordinary temperature. Heating of the chamber 22 may be facilitated by providing a heating unit (not shown) such as a heater in the chamber 22. The pump device 18, supported in the lid 23 via the supporting member 24, moves upward in the chamber 22 when the lid 23 is removed and thus moves upward.

The discharge pipe 19, attached to the discharge side of the pump device 18 and connected to the refrigerant line 16c, is formed to have a spiral form (form of a spring) and thus can elastically deform so as not to hinder the movement of the pump device 18 in the chamber 22. As described above, the pump device 18, disposed in the chamber 22 which is narrow and thus is difficult for a maintenance operator to access, can be pulled upward. Thus, the maintenance operation load such as replacing and repairing of the pump device 18 can be effectively reduced.

After the maintenance operation for the pump device 18 is completed, the pump device 18 is returned to the original position in the chamber 22 (the opening of the chamber 22 is closed by the lid 23), and the shutoff valve 17 is switched to the "open" state, so that the refrigerant is introduced into the chamber 22 from the reservoir tank 12. Here, the refrigerant may be introduced into the chamber 22 from the refrigerant storage tank 26 through the refrigerant discharge line 25.

Next, an inner configuration of the cooling unit 14 will be described in detail. FIG. 5 is a cross-sectional view showing the inner configuration of the cooling unit 14. A solid line arrow and a broken line arrow in FIG. 5 respectively represent the flow of the refrigerant and the flow of the secondary refrigerant.

The cooling unit 14 includes a heat exchanging unit 28 in which the refrigerant, as the cooling target, exchanges heat with the secondary refrigerant cooled by the refrigerator 21. The heat exchanging unit 28 has a configuration in which the line (a dotted line in FIG. 5) and a secondary refrigerant line 29 (a hatched line in FIG. 5) are alternately wound in a spiral form, so that the refrigerant as the cooling target and the secondary refrigerant cooled by the refrigerator 21, respectively, flowing therein, can exchange heat with each other. The refrigerant, pumped from the circulation pump unit 13, is taken into the heat exchanging unit 28 described above through the refrigerant line 16c, and exchanges heat with the secondary refrigerant to be cooled to be in the subcooled state. Then, the resultant refrigerant is supplied to the superconductive cable 11 through the refrigerant line 16d.

The heat exchanging unit 28 incorporates a decompression tank 31 which can exchange heat with the exchanging unit 28 and can be decompressed by an external decompression device 30 (see FIG. 3). The decompression device 30 is a vacuum discharging system such as a rotary pump or a diffuser pump for example, and is connected to the decompression tank 31 through a discharge pipe 32.

The decompression tank 31 is empty (or may include refrigerant gas) when the cooling unit 14 is in normal operation. When the cooling unit 14 is difficult to normally operate due to the failure of the refrigerator 21, the refrigerant is introduces into the decompression tank 31 from the refrigerant storage tank 26 through a refrigerant line 16f and a valve 16f'. Then, the decompression device 30 decompresses the decompression tank 31, so that the saturation temperature of the refrigerant introduced into the decompression tank 31, whereby cold is generated.

The decompression tank 31 has an outer surface in contact with the heat exchanging unit 28 and thus the heat exchange therebetween can be achieved. Thus, even when the refrigerator 21 becomes no longer operable, the refrigerant can be continued to be cooled by the cold generated by decompressing the refrigerant introduced in the decompression tank 31. All things considered, an alternative device needs not to be prepared for the failure of the refrigerator 21 as in the conventional case, whereby the device can be downsized.

The cooling unit 14 includes an outer cover unit 34 surrounding the heat exchanging unit 28. A gap 35 is formed between the outer surface of the heat exchanging unit 28 and an inner wall of the outer cover unit 34. The refrigerant (that is, the refrigerant having a relatively high temperature due to a thermal load on the superconductive cable 11) which has finished cooling the superconductive cable 11 is introduced into the gap 35 through the refrigerant line 16e. The refrigerant, supplied through the refrigerant line 16e, flows in the gap 35, and then is discharged into the reservoir tank 12 from a discharge portion 36 (a plurality of openings, through which the refrigerant can flow out, are formed on the bottom surface of the outer cover unit 34 as shown in FIG. 5) disposed on the lower side of the outer cover unit 35.

When the cold is generated by decompressing the refrigerant in the decompression tank 31, the refrigerant might be overcooled to condense on the outer surface of the heat exchanging unit 28. The thermal conductivity of solid nitrogen is 0.15 (W / cm·K) and thus is extremely smaller than that of copper (thermal conductivity: 8 (W / cm·K)), which is an example of a material of the heat exchanging unit 28. Thus, the condensation of the refrigerant on the outer surface of the heat exchanging unit 28 as described above is not preferable because the heat exchange efficiency of the heat exchanging unit 28 degrades. Thus, in the present embodiment, the refrigerant with a relatively high temperature can flow through the gap 35, whereby the condensation of the refrigerant can be prevented and thus the excellent heat exchange efficiency can be achieved.

A flow velocity V of the refrigerant flowing in the gap 35 may be set in such a manner that the cooling performance of the refrigerant matches a thermal load Q due to the superconductive cable 11 (for example, may be calculated based on Dittus-Boelter formula), and, more specifically, may be set to satisfy the following Formula 1:

[Formula 1]

$$Q = \frac{S\kappa}{De} \times 0.023 \times \left( \frac{\rho V De}{\mu} \right)^{0.8} \times \left( \frac{C_P \mu}{\kappa} \right)^{0.4} \qquad (1)$$

where S is the total area of the outer surface of the heat exchanging unit 28, De is a hydraulic diameter of the refrigerant flow path in the gap 35, and $\rho$, $\mu$, Cp, and $\kappa$ are respectively a density, a viscosity coefficient, a specific heat under constant pressure, and a thermal conductivity of the liquid nitrogen as the refrigerant.

When the refrigerant is introduced in the decompression tank 31 and decompressed, the refrigerant is partially discharge from the decompression device 30 and thus is consumed. The consumed amount m can be obtained in the following formula:

$$m = Q / \lambda \dots (2),$$

where $\lambda$ represents evaporative latent heat of the liquid nitrogen.

As described above, in the cooling device 10, the reservoir tank 12 accommodates the circulation pump unit 13 and the cooling unit 14 having the configurations described above, and thus a highly reliable and compact cooling device for a superconductive cable can be obtained.

Industrial Applicability

The present invention can be applied to a cooling device for a superconductive cable with which a refrigerant is supplied to and circulated in the superconductive cable used for transmitting power to cool the superconductive cable to an extremely low temperature state.

**Claims**

1. A cooling device (10) for a superconducting cable (11) used for transmitting electricity, the cooling device (10) cooling the superconducting cable (11), by supplying and circulating a refrigerant, the cooling device comprising:

   a reservoir tank (12) which stores the refrigerant;
   a circulation pump unit (13) which is accommodated in the reservoir tank (12) and pumps the refrigerant stored in the reservoir tank (12); and
   a cooling unit (14) which is accommodated in the reservoir tank (12), and supplies the refrigerant to the superconducting cable (11) after cooling the refrigerant pumped from the circulation pump unit (13),
   the circulation pump unit (13) including:

   a chamber (22) configured to store the refrigerant introduced from the reservoir tank (12);
   a pump device (18) disposed in the chamber (22) and configured to pump the refrigerant stored in the chamber (22); and
   a shutoff valve (17) for switching between an open state where the inside of the chamber is in communication with the reservoir tank (12), and a closed state where the inside of the chamber (22) is isolated from the reservoir tank (12);

**characterized in that** the cooling device (10) comprises:

a refrigerant discharge line (25) which extends from a vicinity of a bottom portion of the chamber (22) to the outside;
a valve (20a) disposed on the refrigerant discharge line (25); and
a refrigerant storage tank (26) connected to a distal end of the refrigerant discharge line (25).

2. The cooling device (10) for a superconducting cable (11) according to claim 1, wherein the cooling unit (14) comprises:

a heat exchanging unit (28) which cools the refrigerant, pumped by the circulation pump unit (13), through heat exchanging with a secondary refrigerant cooled by a refrigerator (21); and
a decompression tank (31) which is formed in the heat exchanging unit (28), configured to be capable of performing heat exchange with the heat exchanging unit (28), and generates cold by decompressing the refrigerant, introduced into the decompression tank (31), with a decompression device (30).

3. The cooling device (10) for a superconducting cable according to claim 2, wherein
the cooling unit (14) comprises an outer cover unit (34) provided to cover the heat exchanging unit (28); and
the refrigerant used for cooling the superconducting cable (11) is supplied to the reservoir tank (12) after flowing through a gap (35) formed between the heat exchanging unit (28) and the outer cover unit (34).

4. The cooling device for a superconducting cable (11) according to claim 2 or 3, wherein the decompression tank (31) is connected to a refrigerant storage tank (26) which stores a refrigerant at atmospheric pressure, the refrigerant storage tank being capable of supplying the refrigerant to the decompression tank (31).

5. The cooling device (10) for a superconducting cable (11) according to any one of claims 1 to 4, wherein
the chamber (22) has an upper opening portion closed by a lid portion (23);
the pump device (18) is supported by a supporting member (24) extending downward from the lid portion (23); and
the circulation pump unit (13) further comprises:

a discharge pipe (19) which introduces the refrigerant, pumped by the pump device (18), into the cooling unit (13), wherein
the discharge pipe (19) is elastically connected to the pump device (18) so that the pump device (18) is movable in the chamber (22).

**Patentansprüche**

1. Kühlvorrichtung (10) für ein supraleitendes Kabel (11), das zum Übertragen von Elektrizität verwendet wird, wobei die Kühlvorrichtung (10) das supraleitende Kabel (11) durch Zuführen und Umwälzen eines Kühlmittels kühlt, und die Kühlvorrichtung umfasst:

einen Vorratsbehälter (12), der das Kühlmittel speichert;
eine Umwälzpumpeneinheit (13), die im Vorratsbehälter (12) untergebracht ist und das im Vorratsbehälter (12) gespeicherte Kühlmittel pumpt; und
eine Kühleinheit (14), die im Vorratsbehälter (12) untergebracht ist und das Kühlmittel nach dem Kühlen des von der Umwälzpumpeneinheit (13) gepumpten Kühlmittels dem supraleitenden Kabel (11) zuführt, wobei die Umwälzpumpeneinheit (13) umfasst:

eine Kammer (22), die zum Speichern des vom Vorratsbehälter (12) eingeführten Kühlmittels ausgelegt ist;
eine Pumpenvorrichtung (18), die in der Kammer (22) angeordnet und zum Pumpen des in der Kammer (22) gespeicherten Kühlmittels ausgelegt ist; und
ein Absperrventil (17) zum Umstellen zwischen einem offenen Zustand, in dem die Innenseite der Kammer mit dem Vorratsbehälter (12) in Kommunikation ist, und einem geschlossenen Zustand, in dem die Innenseite der Kammer (22) vom Vorratsbehälter (12) getrennt ist;

**dadurch gekennzeichnet, dass** die Kühlvorrichtung (10) umfasst:

eine Kühlmittelableitung (25), die von einer Nähe eines Bodenabschnitts der Kammer (22) zur Außenseite verläuft;

ein Ventil (20a), das auf der Kühlmittelableitung (25) angeordnet ist; und

einen Kühlmittelspeicherbehälter (26), der mit einem distalen Ende der Kühlmittelableitung (25) verbunden ist.

2. Kühlvorrichtung (10) für ein supraleitendes Kabel (11) nach Anspruch 1, wobei die Kühleinheit (14) umfasst:

eine Wärmetauscheinheit (28), die das durch die Umwälzpumpeneinheit (13) gepumpte Kühlmittel durch Wärmeaustausch mit einem durch ein Kühlgerät (21) gekühlten sekundären Kühlmittel kühlt; und

einen Dekompressionsbehälter (31), der in der Wärmetauscheinheit (28) ausgebildet und so ausgelegt ist, dass er Wärmeaustausch mit der Wärmetauscheinheit (28) durchführt und Kälte durch Dekomprimieren des in den Dekompressionsbehälter (31) eingeführten Kühlmittels mit einer Dekompressionsvorrichtung (30) erzeugt.

3. Kühlvorrichtung (10) für ein supraleitendes Kabel nach Anspruch 2, wobei
die Kühleinheit (14) eine äußere Abdeckungseinheit (34) umfasst, die zum Abdecken der Wärmetauscheinheit (28) vorgesehen ist; und
das zum Kühlen des supraleitenden Kabels (11) verwendete Kühlmittel nach dem Durchströmen durch einen Spalt (35), der zwischen der Wärmetauscheinheit (28) und der äußeren Abdeckungseinheit (34) ausgebildet ist, dem Vorratsbehälter (12) zugeführt wird.

4. Kühlvorrichtung (10) für ein supraleitendes Kabel (11) nach Anspruch 2 oder 3, wobei der Dekompressionsbehälter (31) mit einem Kühlmittelspeicherbehälter (26) verbunden ist, der ein Kühlmittel bei atmosphärischem Druck speichert, wobei der Kühlmittelspeicherbehälter zum Zuführen des Kühlmittels zum Dekompressionsbehälter (31) imstande ist.

5. Kühlvorrichtung (10) für ein supraleitendes Kabel (11) nach einem der Ansprüche 1 bis 4, wobei
die Kammer (22) einen oberen Öffnungsabschnitt aufweist, der durch einen Deckelabschnitt (23) verschlossen ist;
die Pumpenvorrichtung (18) durch ein Tragelement (24) getragen wird, das sich vom Deckelabschnitt (23) nach unten erstreckt; und
die Umwälzpumpeneinheit (13) ferner umfasst:

ein Einführrohr (19), welches das durch die Pumpenvorrichtung (18) gepumpte Kühlmittel in die Kühleinheit (13) einführt, wobei
wobei das Einführrohr (19) mit der Pumpvorrichtung (18) elastisch verbunden ist, so dass die Pumpenvorrichtung (18) in der Kammer (22) bewegt werden kann.

**Revendications**

1. Dispositif de refroidissement (10) pour un câble supraconducteur (11) utilisé pour transmettre de l'électricité, le dispositif de refroidissement (10) refroidissant le câble supraconducteur (11), en fournissant et en faisant circuler un fluide frigorigène, le dispositif de refroidissement comprenant :

une cuve-réservoir (12) qui stocke le fluide frigorigène ;
une unité de pompe de circulation (13) qui est logée dans la cuve-réservoir (12) et qui pompe le fluide frigorigène stocké dans la cuve-réservoir (12) ; et
une unité de refroidissement (14) qui est logée dans la cuve-réservoir (12), et délivre le fluide frigorigène au câble supraconducteur (11) après avoir refroidi le fluide frigorigène pompé par l'unité de pompe de circulation (13),
l'unité de pompe de circulation (13) comprenant :

une chambre (22) configurée pour stocker le fluide frigorigène introduit à partir de la cuve-réservoir (12) ;
un dispositif de pompe (18) disposé dans la chambre (22) et configuré pour pomper le fluide frigorigène stocké dans la chambre (22) ; et
une vanne de coupure (17) pour commuter entre un état ouvert, dans lequel l'intérieur de la chambre est en communication avec la cuve-réservoir (12), et un état fermé, dans lequel l'intérieur de la chambre (22) est isolé de la cuve-réservoir (12) ;

**caractérisé en ce que** le dispositif de refroidissement (10) comprend :

une conduite de refoulement de fluide frigorigène (25) qui s'étend d'un voisinage d'une partie inférieure de la chambre (22) à l'extérieur ;
une vanne (20a) disposée sur la conduite de refoulement de fluide frigorigène (25) ; et
une cuve de stockage de fluide frigorigène (26) reliée à une extrémité distale de la conduite de refoulement de fluide frigorigène (25).

2. Dispositif de refroidissement (10) pour un câble supraconducteur (11) selon la revendication 1, dans lequel l'unité de refroidissement (14) comprend :

une unité d'échange de chaleur (28) qui refroidit le fluide frigorigène, pompé par l'unité de pompe de circulation (13), par un échange de chaleur avec un fluide frigorigène secondaire refroidi par un réfrigérateur (21) ; et
une cuve de détente (31) qui est formée dans l'unité d'échange de chaleur (28), configurée pour être capable d'effectuer un échange de chaleur avec l'unité d'échange de chaleur (28), et qui génère du froid en détendant le fluide frigorigène, introduit dans la cuve de détente (31), avec un dispositif de détente (30).

3. Dispositif de refroidissement (10) pour un câble supraconducteur selon la revendication 2, dans lequel
l'unité de refroidissement (14) comprend une unité de recouvrement extérieure (34) prévue pour recouvrir l'unité d'échange de chaleur (28) ; et
le fluide frigorigène utilisé pour refroidir le câble supraconducteur (11) est fourni à la cuve-réservoir (12) après s'être écoulé à travers un espace (35) formé entre l'unité d'échange de chaleur (28) et l'unité de recouvrement extérieure (34).

4. Dispositif de refroidissement pour un câble supraconducteur (11) selon la revendication 2 ou 3, dans lequel la cuve de détente (31) est reliée à une cuve de stockage de fluide frigorigène (26) qui stocke un fluide frigorigène à la pression atmosphérique, la cuve de stockage de fluide frigorigène étant capable de fournir le fluide frigorigène à la cuve de détente (31) .

5. Dispositif de refroidissement (10) pour un câble supraconducteur (11) selon l'une quelconque des revendications 1 à 4, dans lequel
la chambre (22) comporte une partie d'ouverture supérieure fermée par une partie de couvercle (23) ;
le dispositif de pompe (18) est supporté par un élément de support (24) s'étendant vers le bas à partir de la partie de couvercle (23) ; et
l'unité de pompe de circulation (13) comprend en outre :

un tuyau de refoulement (19) qui introduit le fluide frigorigène, pompé par le dispositif de pompe (18), dans l'unité de refroidissement (13), dans lequel
le tuyau de refoulement (19) est relié de manière élastique au dispositif de pompe (18) de sorte que le dispositif de pompe (18) puisse être déplacé dans la chambre (22).

Fig.1

Fig.2

Fig.3

REFRIGERANT
STORAGE TANK

REFRIGERA-
TOR

Fig.4

TO REFRIGERANT
STORAGE TANK

TO COOLING UNIT

Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000114030 A

- JP 2011054500 A

**Non-patent literature cited in the description**

- HTS Underground Power Cable Final Report. *DE-FC36-03GO013301, http://www.os-ti.gov/bridge/serv-lets/purl/975691-IRpM7i/975691.pdf*